# EUROPEAN PATENT APPLICATION

(11) **EP 2 873 718 A1**
(43) Date of publication of application: **20.05.2015**
(21) Application number: 13817377.8
(22) Date of filing: 11.07.2013
(51) Int. Cl.: C10M 141/10, C10M 101/02, C10M 107/02, C10M 129/72, C10M 133/12, C10M 133/38, C10M 137/04, C10M 137/10, C10M 169/04, F16C 33/10, F16C 33/12, C10N 30/06, C10N 40/02

(54) **LUBRICATING OIL COMPOSITION**

(30) Priority: 11.07.2012 JP 2012155815
(71) Applicant: Idemitsu Kosan Co., Ltd, Tokyo 100-8321 (JP)
(72) Inventor: KIKO, Yumiko, Chiba 299-0107 (JP)
(74) Representative: Hoffmann Eitle
(86) International application number: PCT/JP2013/069009
(87) International publication number: WO 2014/010682

(57) **Abstract**

A lubricating oil composition contains a base oil, (A) a phosphate, (B) a thiophosphate and (C) a naphthylamine derivative. The lubricating oil composition is excellent in wear resistance and is unlikely to generate sludge even at a high temperature, and thus is suitable for an oil-impregnated bearing of a high-speed spindle motor provided to DVD-RAM, Blu-ray disc or the like.

## Description

### TECHNICAL FIELD

The present invention relates to lubricating oil compositions and, in particular, to a lubricating oil composition for an oil-impregnated bearing in a motor of audio/video equipment or the like.

### BACKGROUND ART

Oil-impregnated bearings are produced by impregnating porous materials such as sintered metal, grown cast iron and synthetic resin with a lubricating oil. In particular, an oil-impregnated sintered bearing, which is producible at low costs and self-lubricating and has relatively low friction and high accuracy, is widely used as a motor bearing in relevant parts of vehicle electric components, audio/video equipment, office supplies, home electric appliances, computer auxiliary storage drives and the like.

A lubricating oil for a spindle motor used in audio/video equipment or the like should be capable of reducing friction resistance (bearing loss) between a rotary shaft and a bearing and suppressing temperature rise during continuous rotation. In connection with the above, a lubricating oil for oil-impregnated bearings is disclosed, the lubricating oil being prepared by blending a base oil with: a fatty acid metal salt; and at least one of a phosphate or an amine salt thereof and a sulfuric extreme pressure agent (see Patent Literature 1).

### CITATION LIST

### PATENT LITERATURE(S)

Patent Literature 1: Japanese Patent No. 4777526

### SUMMARY OF THE INVENTION

### PROBLEM(S) TO BE SOLVED BY THE INVENTION

In the field of DVD-RAM and Blu-ray Disc, a writing speed has been increased and, accordingly, lubrication under an ultra-high speed has been required. However, an increase in the writing speed is accompanied by an increase in wear due to an unbalanced load, which results in seizure and malfunction. Further, an additive for reducing a friction coefficient is generally poor in oxidation stability and thus generates sludge at a high temperature to cause clogging of an oil-impregnated bearing. As a result, a lubricating oil is unlikely to seep out and thus the lifetime of the bearing is shortened. The above problems, however, cannot be sufficiently solved with the lubricating oil for oil-impregnated bearings disclosed in Patent Literature 1.

An object of the invention is to provide a lubricating oil composition suitable for oil-impregnated bearings, the lubricating oil composition being excellent in wear resistance and unlikely to generate sludge even at a high temperature.

### MEANS FOR SOLVING THE PROBLEM(S)

In order to solve the above problems, an aspect of the invention provides the following lubricating oil composition.
(1) A lubricating oil composition contains a base oil, (A) a phosphate, (B) a thiophosphate and (C) a naphthylamine derivative.
(2) The lubricating oil composition of (1) further contains (D) an alkenylsuccinic acid polyhydric alcohol ester.
(3) The lubricating oil composition of (1) or (2) further contains (E) a benzotriazole or a derivative thereof.
(4) In the lubricating oil composition of any one of (1) to (3), the base oil is a hydrocarbon base oil.
(5) The lubricating oil composition of any one of (1) to (4) is used for an oil-impregnated bearing.
(6) In the lubricating oil composition of (5), the oil-impregnated bearing is used for a rotation drive motor for a synthetic resin disc.

The above aspect of the invention can provide a lubricating oil composition excellent in wear resistance and unlikely to generate sludge even at a high temperature. The lubricating oil composition is thus suitable for oil-impregnated bearings.

### DESCRIPTION OF EMBODIMENT(S)

A lubricating oil composition according to an exemplary embodiment of the invention (hereinafter also referred to as "the present composition") is provided by blending a base oil with (A) a phosphate, (B) a thiophosphate and (C) a naphthylamine or a derivative thereof. It should be noted that the expression "being provided by blending" means "being blended with", and thus means "containing". The present composition will be described below in detail.

### Base Oil

The base oil in the present composition is not subject to any particular limitation. However, when the present composition is provided to an oil-impregnated bearing in a rotation drive motor for a synthetic resin disc, the base oil is preferably a hydrocarbon base oil. The synthetic resin disc herein includes optical discs such as DVD (e.g., DVD-R, DVD-RAM and DVD-RW) and Blu-ray Disc.

Polar base oils such as an ester base oil and an ether base oil are likely to cause alteration of a surface of the synthetic resin disc, which results in problems such as an error in reading the disc.

When the viscosity of the base oil is extremely low, an oil film is unlikely to be sustained. When the viscosity of the base oil is extremely high, the torque of the motor is likely to be extremely increased. Further, when the viscosity of the base oil is extremely high, a lubricating oil is unlikely to soak into a portion to be lubricated during high-speed rotation and thus seizure may be caused. In view of the above, the kinematic viscosity of the base oil at 40 degrees C is preferably in the range from 15 mm²/s to 40 mm²/s and more preferably in the range from 20 mm²/s to 30 mm²/s.

The hydrocarbon base oil is preferably polyolefin, examples of which are alpha-olefin homopolymer and alpha-olefin copolymer. Any one of the above base oils may be used alone, or two or more thereof may be used in combination.

### Component (A)

The component (A) in the present composition is a phosphate. In particular, a phosphate functioning as an extreme pressure agent is favorable in terms of wear resistance.

Examples of the phosphate include a triaryl phosphate, trialkyl phosphate, trialkylaryl phosphate, triarylalkyl phosphate and trialkenyl phosphate. Specific examples of the phosphate include a triphenyl phosphate, tricresyl phosphate, benzyl diphenyl phosphate, ethyl diphenyl phosphate, tributyl phosphate, ethyl dibutyl phosphate, cresyl diphenyl phosphate, dicresyl phenyl phosphate, ethylphenyl diphenyl phosphate, diethylphenyl phenyl phosphate, propylphenyl diphenyl phosphate, dipropylphenyl phenyl phosphate, triethylphenyl phosphate, tripropylphenyl phosphate, butylphenyl diphenyl phosphate, dibutylphenyl phenyl phosphate, tributylphenyl phosphate, trihexyl phosphate, tri(2-ethylhexyl) phosphate, tridecyl phosphate, trilauryl phosphate, trimyristyl phosphate, tripalmityl phosphate, tristearyl phosphate and trioleyl phosphate.

Any one of the above phosphates may be used alone as the component (A) in the present composition, or two or more thereof may be used in combination. The content of the component (A) is preferably in the range from 0.1 mass% to 5 mass% of the total amount of the present composition, more preferably in the range from 1 mass% to 4 mass%, and further preferably in the range from 1.5 mass% to 2.5 mass%. When the content of the component (A) is less than 0.1 mass%, the wear resistance may be insufficient. However, even when the content of the component (A) exceeds 5 mass%, the component (A) will not be effective in improving the wear resistance in proportion to the content.

The content of the component (A) is preferably in the range from 150 mass ppm to 3000 mass ppm of the total amount of the present composition in terms of phosphorus, and more preferably in the range from 300 mass ppm to 2000 mass ppm.

### Component (B)

The component (B) in the present composition is a thiophosphate. The thiophosphate should be effective for the present composition in maintaining oxidation stability and improving wear resistance.

Examples of the thiophosphate include tributyl phosphorothionate, tripentyl phosphorothionate, trihexyl phosphorothionate, triheptyl phosphorothionate, trioctyl phosphorothionate, trinonyl phosphorothionate, tridecyl phosphorothionate, triundecyl phosphorothionate, tridodecyl phosphorothionate, tritridecyl phosphorothionate, tritetradecyl phosphorothionate, tripentadecyl phosphorothionate, trihexadecyl phosphorothionate, triheptadecyl phosphorothionate, trioctadecyl phosphorothionate, trioleyl phosphorothionate, triphenyl phosphorothionate, tricresyl phosphorothionate, trixylenyl phosphorothionate, cresyl diphenyl phosphorothionate, xylenyl diphenyl phosphorothionate, tris(n-propylphenyl)phosphorothionate, tris(isopropylphenyl)phosphorothionate, tris(n-butylphenyl)phosphorothionate, tris(isobutylphenyl)phosphorothionate, tris(s-butylphenyl)phosphorothionate, tris(t-butylphenyl)phosphorothionate and tris(2,4-C9-C10 isoalkylphenol)thiophosphate.

Any one of the above thiophosphates may be used alone as the component (B) in the present composition, or two or more thereof may be used in combination. The content of the component (B) is preferably in the range from 0.1 mass% to 5 mass% of the total amount of the present composition, more preferably in the range from 0.2 mass% to 2 mass%, and further preferably in the range from 0.3 mass% to 0.6 mass%. When the content of the component (B) is less than 0.1 mass%, the component (B) may be insufficiently effective in improving the oxidation stability and wear resistance. However, even when the content of the component (B) exceeds 5 mass%, the effects of the component (B) will not be improved in proportion to the content.

### Component (C)

The component (C) in the present composition is a naphthylamine derivative. The naphthylamine derivative should be effective for the present composition in maintaining oxidation stability and suppressing vaporizability.

The naphthylamine derivative is particularly preferably a phenyl-alpha-naphthylamine represented by the following formula (1) and a derivative thereof (hereiafter these substances are also referred to simply as "naphthylamines").

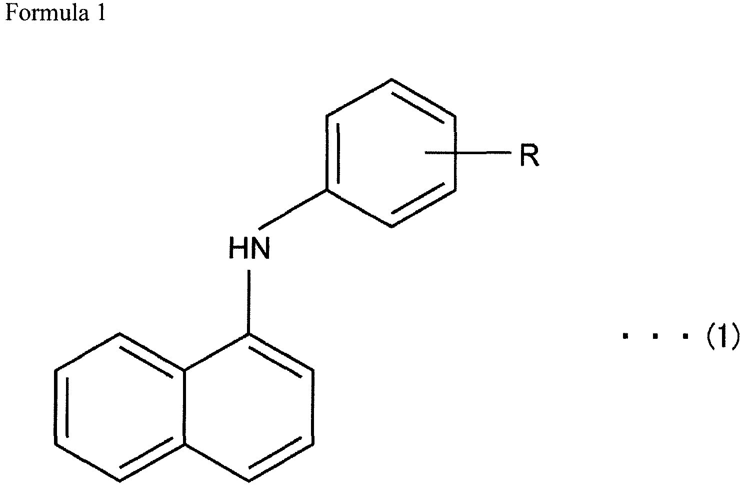

In the above formula (1), R represents a hydrogen atom or an alkyl group. The alkyl group possibly represented by R in the above formula (1) is linear or branched and has 1 to 16 carbon atoms. Specific examples of the alkyl group include methyl, ethyl, propyl, butyl, pentyl, hexyl, heptyl, octyl, nonyl, decyl, undecyl, dodecyl, tridecyl, tetradecyl, pentadecyl and hexadecyl. It should be noted that when R has carbon atoms more than 16, the percentage of a functional group in a molecule is reduced and thus an antioxidative effect may be lowered.

The alkyl group possibly represented by R in the formula (1) is preferably a branched alkyl group having 8 to 16 carbon atoms in terms of solubility, and further preferably a branched alkyl group having 8 to 16 carbon atoms derived from an oligomer of an olefin having 3 or 4 carbon atoms. Specific examples of the olefin having 3 or 4 carbon atoms include propylene, 1-butene, 2-butene and isobutylene, among which propylene and isobutylene are preferable in terms of solubility. In terms of further enhancing the solubility, R further preferably represents any one of a branched octyl group derived from an isobutylene dimer, a branched nonyl group derived from a propylene trimer, a branched dodecyl group derived from an isobutylene trimer, a branched dodecyl group derived from a propylene tetramer, and a branched pentadecyl group derived from a propylene pentamer, among which a branched octyl group derived from an isobutylene dimer, a branched dodecyl group derived from an isobutylene trimer and a branched dodecyl group derived from a propylene tetramer are especially preferable.

The alkyl group possibly represented by R may be linked to a phenyl group at any position, but preferably at a p-position relative to an amino group. Further, the amino group may be linked to a naphthyl group at any position, but is preferably linked at an alpha-position.

Any one of the above naphthylamines represented by the formula (1) may be used alone, or a mixture of structurally different two or more thereof may be used.

Any one of the above naphthylamine derivatives may be used alone as the component (C) in the present composition, or two or more thereof may be used in combination. The content of the component (C) is preferably in the range from 0.1 mass% to 5 mass% of the total amount of the present composition, more preferably in the range from 0.2 mass% to 2 mass%, and further preferably in the range from 0.3 mass% to 1 mass%. When the content of the component (C) is less than 0.1 mass%, the component (C) may be insufficiently effective in improving the oxidation stability and evaporation characteristics. However, even when the content of the component (C) exceeds 5 mass%,

the effects of the component (C) will not be improved in proportion to the content.

The present composition may be further blended with an alkenylsuccinic acid polyhydric alcohol ester as a component (D) to improve the evaporation characteristics.

The component (D) is an ester prepared from, for instance, an alkenylsuccinic acid with an alkenyl group having 12 to 20 carbon atoms and a polyhydric alcohol.

When the alkenyl group, examples of which include dodecenyl, hexadecenyl, octadecenyl and isooctadecenyl, has carbon atoms less than 12, the friction coefficient is likely to be slightly increased. When the alkenyl group has carbon atoms more than 20, rust resistance is unlikely to be exhibited.

Examples of the polyhydric alcohol include: saturated dihydric alcohols such as ethylene glycol, propylene glycol, butylene glycol, hexylene glycol and isomers of these glycols; and trihydric or higher saturated polyhydric alcohols such as trimethylol propane, trimethylol butane, glycerin, pentaerythritol and dipentaerythritol. Among the above, saturated dihydric alcohols having 3 or 4 carbon atoms such as propylene glycol, butylene glycol, trimethylol propane, glycerin and pentaerythritol are preferable in terms of lubricity.

Any one of the above substances may be used alone as the component (D), or two or more thereof may be used in combination. The content of the component (D) is preferably in the range from 0.01 mass% to 2 mass% of the total amount of the present composition, more preferably in the range from 0.02 mass% to 1 mass%, and further preferably in the range from 0.03 mass% to 0.5 mass%. When the content of the component (D) is less than 0.01 mass%, the component (D) may be insufficiently effective in improving the evaporation characteristics. However, even when the content of the component (D) exceeds 2 mass%, the effects of the component (D) will not be improved in proportion to the content.

The present composition may be further blended with a benzotriazole or a derivative thereof as a component (E) to improve the evaporation characteristics. Specific examples of the component (E) include a 1,2,3-benzotriazole, 1-methyl-1,2,3-benzotriazole, 1-phenyl-1,2,3-benzotriazole, 2-phenyl-1,2,3-benzotriazole, 4-chloro-1,2,3-benzotriazole, 4-nitro-1,2,3-benzotriazole, 5-methyl-1,2,3-benzotriazole, 5-ethyl-1,2,3-benzotriazole, 5-propyl-1,2,3-benzotriazole, 5-isobutyl-1,2,3-benzotriazole, 5-methoxy-1,2,3-benzotriazole, 5-chloro-1,2,3-benzotriazole, 5,6-dimethyl-1,2,3-benzotriazole, 1,2,3-benzotriazole carboxylic acid, ester derivatives of these substances, and N-dialkylaminomethyl-1,2,3-benzotriazole.

Any one of the above substances may be used alone as the component (E), or two or more thereof may be used in combination. The content of the component (E) is preferably in the range from 0.001 mass% to 5 mass% of the total amount of the present composition, more preferably in the range from 0.005 mass% to 3 mass%, and further preferably in the range from 0.01 mass% to 2 mass%. When the content of the component (E) is less than 0.001 mass%, the component (E) may be insufficiently effective in improving the evaporation characteristics. Even when the content of the component (E) is increased more than 5 mass%, the effects of the component (E) will not be improved in proportion to the content.

The present composition may be further blended with known additives such as an anti-emulsifier, a rust inhibitor, a detergent dispersant and an antifoaming agent, if necessary.

Examples of the anti-emulsifier include a polyalkylene glycol and a metal sulfonate, among which an EO/PO block copolymer ("EO" represents an ethylene oxide and "PO" represents a propylene oxide) such as a polyalkylene glycol having OH at both ends is preferable.

Examples of the rust inhibitor include a metal sulfonate, a carboxylic acid, an alkanolamine, an acid amide, and a metal salt of phosphate, among which a carboxylic acid is preferable.

Examples of the detergent dispersant include a metal sulfonate, a metal phenate, a metal salicylate, a metal phosphonate and a succinimide.

Examples of the antifoaming agent include a methylsilicone, a fluorosilicone and a polyacrylate, among which a methylsilicone is preferable.

The present composition containing the base oil blended with the above predetermined components is favorably usable as a lubricating oil for an oil-impregnated bearing in a motor of audio/video equipment or the like. In particular, a spindle motor for DVD-RAM, Blu-ray Disc or the like needs stable lubrication between a high-speed rotary shaft and an oil-impregnated bearing. When the present composition is provided to an oil-impregnated bearing in such a spindle motor, wear can be reduced and sludge is unlikely to be generated even at a high temperature. Further, the present composition is less volatilizable from the bearing. Therefore, the present composition contributes to a long-lasting and stable operation.

### Examples

Now, the invention will be further described in detail with reference to Examples and Comparative Examples, which by no means limit the present invention.

### Examples 1 to 4 and Comparative Examples 1 to 14

Lubricating oil compositions (sample oils) were prepared in accordance with formulations shown in Tables 1 to 3.

**Table 1**

| | | Ex. 1 | Ex. 2 | Ex. 3 | Ex. 4 | Comp. 1 | Comp. 2 |
|---|---|---|---|---|---|---|---|
| Formulation (mass%) | Base Oil 1 | - | - | - | - | - | - |
| | Base Oil 2 | 96.50 | 96.40 | 96.50 | 96.40 | 97.90 | 97.90 |
| | Compound 1 | 1.00 | 1.00 | 0.50 | 0.50 | 0.10 | 0.10 |
| | Compound 2 | 0.50 | 0.50 | 1.00 | 1.00 | - | - |
| | Compound 3 | - | 0.05 | - | 0.05 | - | - |
| | Compound 4 | - | 0.05 | - | 0.05 | - | - |
| | Compound 5 | - | - | - | - | - | - |
| | Compound 6 | - | - | - | - | - | - |
| | Compound 7 | 2.00 | 2.00 | 2.00 | 2.00 | - | 2.00 |
| | Compound 8 | 0.50 | 0.50 | 0.50 | 0.50 | - | - |
| | Compound 9 | - | - | - | - | - | - |
| | Compound 10 | - | - | - | - | 2.00 | - |
| | Compound 11 | - | - | - | - | - | - |
| | Total | 100 | 100 | 100 | 100 | 100 | 100 |
| Properties of Sample Oil | Kinematic Viscosity @40°C (mm²/s) | 30.04 | 30.04 | 30.16 | 30.16 | 30.08 | 30.08 |
| | Kinematic Viscosity @100°C (mm²/s) | 5.702 | 5.702 | 5.712 | 5.712 | 5.785 | 5.785 |
| | Viscosity Index | 133 | 133 | 133 | 133 | 138 | 138 |
| | Acid Number (mgKOH/g) | 0.06 | 0.06 | 0.06 | 0.06 | 0.59 | 0.03 |
| | Color (ASTM) | L0.5 | L0.5 | L0.5 | L0.5 | L0.5 | L0.5 |
| | P (mass ppm) | 1790 | 1790 | 1800 | 1800 | 1020 | 1640 |
| | S (mass ppm) | 221 | 221 | 220 | 220 | - | - |
| Properties of Sample Oil (after ISOT test) | Kinematic Viscosity @40°C (mm²/s) | 30.18 | 30.09 | 30.49 | 30.25 | 29.88 | 28.49 |
| | Kinematic Viscosity @100°C (mm²/s) | 5.722 | 5.726 | 5.758 | 5.738 | 5.809 | 5.815 |
| | Viscosity Index | 133 | 134 | 133 | 134 | 141 | 153 |
| | Acid Number (mgKOH/g) | 0.02 | 0.03 | 0.02 | 0.03 | 1.15 | 0.04 |
| | Color (ASTM) | L2.5 | L2.5 | L3.5 | L3.0 | blown transparent | L1.2 |
| | P (mass ppm) | 1820 | 1830 | 1800 | 1820 | 515 | - |
| | S (mass ppm) | 214 | 226 | - | 223 | 3> | - |
| Performance of Sample Oil | Rotating Bomb Oxidation Test (min) | 3843 | 3162 | 4506 | 4115 | 200 | 200 |
| | Generated Sludge Volume (mg/100mL) | 3.1 | 0.0 | 3.3 | 0.8 | 280 | 55 |
| | Pendulum Test (according to JASO method, RT) | 0.20 | 0.20 | 0.20 | 0.20 | 0.09 | 0.12 |
| | Four-ball Wear Resistance Test (mm) | 0.42 | 0.42 | 0.42 | 0.42 | 0.46 | 0.53 |
| | Falex Wear Test (mg) | 1.7 | 1.7 | 1.7 | 1.7 | 0 | 24.8 |
| | LFW-1 Wear Test (mm) | 0.31 | 0.31 | 0.31 | 0.31 | 0.42 | 0.50 |
| | Evaporation Characteristics (mass%) | 26.0 | 27.0 | 10.0 | 11.0 | 40.0 | 39.0 |

**Table 2**

| | | Comp. 3 | Comp. 4 | Comp. 5 | Comp. 6 | Comp. 7 | Comp. 8 |
|---|---|---|---|---|---|---|---|
| Formulation (mass%) | Base Oil 1 | - | - | - | - | - | - |
| | Base Oil 2 | 97.90 | 97.90 | 99.65 | 97.70 | 97.40 | 97.40 |
| | Compound 1 | 0.10 | 0.10 | 0.10 | 0.10 | 0.10 | 0.10 |
| | Compound 2 | - | - | - | - | - | - |
| | Compound 3 | - | - | - | - | - | - |
| | Compound 4 | - | - | - | - | - | - |
| | Compound 5 | - | - | 0.20 | 0.20 | - | - |
| | Compound 6 | - | - | 0.05 | - | - | - |
| | Compound 7 | - | - | - | 2.00 | 2.00 | 2.00 |
| | Compound 8 | - | 2.00 | - | - | 0.50 | - |
| | Compound 9 | 2.00 | - | - | - | - | 0.50 |
| | Compound 10 | - | - | - | - | - | - |
| | Compound 11 | - | - | - | - | - | - |
| | Total | 100 | 100 | 100 | 100 | 100 | 100 |
| Properties of Sample Oil | Kinematic Viscosity @40°C (mm²/s) | 30.08 | 30.08 | 30.38 | 29.45 | 29.85 | 29.17 |
| | Kinematic Viscosity @100°C (mm²/s) | 5.785 | 5.785 | 5.805 | 5.681 | 5.725 | 5.649 |
| | Viscosity Index | 138 | 138 | 137 | 137 | 136 | 137 |
| | Acid Number (mgKOH/g) | 0.03 | 0.03 | 0.03 | 0.03 | 0.03 | 0.04 |
| | Color (ASTM) | L0.5 | L0.5 | L0.5 | L0.5 | L0.5 | L0.5 |
| | P (mass ppm) | - | 640 | 235 | 1830 | 1840 | 1640 |
| | S (mass ppm) | 4400 | 880 | 451 | 409 | 219 | 1100 |
| Properties of Sample Oil (after ISOT test) | Kinematic Viscosity @40°C (mm²/s) | 28.49 | 28.49 | 28.49 | 30.53 | 29.5 | 30.42 |
| | Kinematic Viscosity @100°C (mm²/s) | 5.815 | 5.815 | 5.815 | 5.683 | 5.721 | 5.685 |
| | Viscosity Index | 153 | 153 | 153 | 129 | 139 | 129 |
| | Acid Number (mgKOH/g) | 0.04 | 0.04 | 0.04 | 0.04 | 0.04 | 0.21 |
| | Color (ASTM) | L1.3 | L1.4 | L1.5 | L1.5 | L1.5 | blown transparent |
| | P (mass ppm) | - | - | 1840 | 1770 | 1840 | 1640 |
| | S (mass ppm) | - | - | 224 | 363 | 217 | 467 |
| Performance of Sample Oil | Rotating Bomb Oxidation Test (min) | 200 | 200 | 196 | 214 | 189 | 184 |
| | Generated Sludge Volume (mg/100mL) | 56 | 57 | 58 | 21 | 0.9 | 10 |
| | Pendulum Test (according to JASO method, RT) | 0.15 | 0.16 | - | 0.17 | 0.20 | 0.21 |
| | Four-ball Wear Resistance Test (mm) | 0.78 | 0.82 | 0.74 | 0.54 | 0.42 | 0.50 |
| | Falex Wear Test (mg) | seizure | seizure | 27.5 | 3.9 | 1.7 | 16.2 |
| | LFW-1 Wear Test (mm) | 0.78 | 0.90 | 0.41 | 0.34 | 0.31 | 0.35 |
| | Evaporation Characteristics (mass%) | 43.0 | 42.0 | 38.0 | 41.0 | 42.0 | 41.0 |

**Table 3**

| | | Comp. 9 | Comp. 10 | Comp. 11 | Comp. 12 | Comp. 13 | Comp. 14 |
|---|---|---|---|---|---|---|---|
| Formulation (mass%) | Base Oil 1 | - | - | - | - | 97.50 | - |
| | Base Oil 2 | 97.50 | 96.50 | 96.45 | 96.40 | - | 88.40 |
| | Compound 1 | 0.50 | 1.50 | 1.50 | 1.50 | 0.10 | 0.10 |
| | Compound 2 | - | - | - | - | - | - |
| | Compound 3 | - | - | 0.05 | 0.05 | - | - |
| | Compound 4 | - | - | - | 0.05 | - | - |
| | Compound 5 | - | - | - | - | - | - |
| | Compound 6 | - | - | - | - | - | - |
| | Compound 7 | 2.00 | 2.00 | 2.00 | 2.00 | - | - |
| | Compound 8 | 0.50 | 0.50 | 0.50 | 0.50 | - | - |
| | Compound 9 | - | - | - | - | - | - |
| | Compound 10 | - | - | - | - | 2.00 | - |
| | Compound 11 | - | - | - | - | 0.40 | 11.50 |
| | Total | 100 | 100 | 100 | 100 | 100 | 100 |
| Properties of Sample Oil | Kinematic Viscosity @40°C (mm²/s) | 30.38 | 30.08 | 30.08 | 29.93 | 18.99 | 29.98 |
| | Kinematic Viscosity @100°C (mm²/s) | 5.805 | 5.785 | 5.785 | 5.691 | 4.29 | 5.83 |
| | Viscosity Index | 137 | 138 | 138 | 133 | 136 | 141 |
| | Acid Number (mgKOH/g) | 0.03 | 0.03 | 0.03 | 0.06 | 1.23 | 1.28 |
| | Color (ASTM) | L0.5 | L0.5 | L0.5 | L0.5 | L0.5 | L0.5 |
| | P (mass ppm) | 1800 | 1800 | 1800 | 1800 | 1020 | 1020 |
| | S (mass ppm) | 217 | 217 | 217 | 217 | - | - |
| Properties of Sample Oil (after ISOT test) | Kinematic Viscosity @40°C (mm²/s) | 30.04 | 30.35 | 30.22 | 30.22 | 18.01 | 28.46 |
| | Kinematic Viscosity @100°C (mm²/s) | 5.736 | 5.751 | 5.732 | 5.724 | 4.01 | 5.564 |
| | Viscosity Index | 135 | 134 | 134 | 133 | 132 | 137 |
| | Acid Number (mgKOH/g) | 0.17 | 0.12 | 0.16 | 0.19 | 0.58 | 0.58 |
| | Color (ASTM) | blown opaque | blown opaque | blown opaque | blown opaque | dark-blown opaque | dark-blown opaque |
| | P (mass ppm) | 1820 | 1830 | 1830 | 1840 | 264 | 265 |
| | S (mass ppm) | 207 | 253 | 213 | 213 | 2> | 3> |
| Performance of Sample Oil | Rotating Bomb Oxidation Test (min) | 2813 | 3531 | 3178 | 2040 | 1305 | 1360 |
| | Generated Sludge Volume (mg/100mL) | 4.4 | 4.9 | 1.8 | 2.3 | 180 | 180 |
| | Pendulum Test (according to JASO method, RT) | 0.20 | 0.20 | 0.20 | 0.20 | 0.09 | 0.09 |
| | Four-ball Wear Resistance Test (mm) | 0.42 | 0.42 | 0.42 | 0.42 | 0.50 | 0.53 |
| | Falex Wear Test (mg) | 1.7 | 1.7 | 1.7 | 1.7 | 13 | 12.9 |
| | LFW-1 Wear Test (mm) | 0.31 | 0.31 | 0.31 | 0.31 | 0.86 | 0.68 |
| | Evaporation Characteristics (mass%) | 41.5 | 36.0 | 35.0 | 36.0 | 65.0 | 39.0 |

The base oils 1 and 2 and the compounds 1 to 11 in Tables 1 to 3 shown above are as follows.
Base Oil 1: PAO, kinematic viscosity at 40 degrees C: 30 mm²/s
Base Oil 2: PAO, kinematic viscosity at 40 degrees C: 17 mm²/s
Compound 1: monobutylphenylmonooctylphenylamine
Compound 2: p-t-octylphenyl-1-naphthylamine (component (C)) Compound 3: N-dialkylaminomethyl benzotriazole (component (E))
Compound 4: alkenylsuccinic acid polyhydric alcohol ester (PO adduct of a dodecenyl succinic acid) (component (D))
Compound 5: dithiophosphate
Compound 6: triphenyl phosphorothionate (component (B))
Compound 7: tricresyl phosphate (component (A))
Compound 8: tris(2,4-C9-C10 isoalkylphenol)thiophosphate (component (B))
Compound 9: dibutyl dithioglycolate
Compound 10: dioleyl hydrogen phosphonate
Compound 11: aluminum stearate

The properties and performance of each of the sample oils were determined as follows. The results are shown in Tables 1 to 3.

### (1) Kinematic viscosity (40 degrees C, 100 degrees C) and viscosity index

Kinematic viscosities and viscosity index were measured according to JIS K 2283.

### (2) Acid number

Acid number was measured by an electrical potential technique according to "Determination of Lubricant Neutralization Number" defined in JIS K2501.

### (3) Color (ASTM)

Color (ASTM) was measured according to JIS K 2580.

### (4) Phosphorus content (P)

Phosphorus content was measured according to JPI-5S-38-92.

### (5) Sulfur content (S)

Sulfur content was measured according to JIS K 2541.

### (6) ISOT test

ISOT was measured according to JIS K 2514. Specifically, a sample oil kept at 165.5 degrees C was forcefully agitated at 1300 rpm under the presence of a steel-copper catalyst, and maintained for 24 hours while being mixed with air therearound by agitation. The sample oil was then again measured in terms of the properties (1) to (5).

### (7) Rotating bomb oxidation test

A time (min) that elapsed before the end of pressure drop was measured according to JIS K 2514.

### (8) Generated sludge volume

After a sample oil was subjected to the above ISOT test, generated sludge was collected with a Millipore filter (pore diameter: 0.8 µm) and the volume (mg / 100mL) of the sludge was measured.

### (9) Pendulum test

Evaluation was performed at room temperature using a tester defined by JASO M 314 to determine a friction coefficient.

### (10) Four-ball wear resistance test

The test was performed according to ASTM D 4172 under the following conditions: a load of 392 N, a rotation speed of 1200 rpm, an oil temperature of 80 degrees C and a test time of 60 minutes. The respective wear scar diameters of three half-inch balls were averaged to calculate an average wear scar diameter (mm) (a reported value).

### (11) Falex wear test

The test was performed with a Falex test machine defined by ASTM D2670 under the following conditions: a load of 890 N, a rotation speed of 1800 rpm, an oil temperature of 80 degrees C and a test time 60 minutes, and the wear amount (mg) of a pin was measured. Incidentally, the material of the pin was AISI/SAE-3135 steel and the material of a block was AISI-1137 steel.

### (12) LFW-1 wear test

The test was performed with an LFW-1 block-on-ring tester defined in, for instance, JASO M358 at room temperature and at a rotation speed of 1800 rpm and a predetermined load (10 minutes for each of step loads of 150N, 200N and 250N), and then the wear depth (mm) of the block was measured. Incidentally, a trial operation was performed at a load of 50 N and a rotation speed of 100 rpm.

### (13) Evaporation Characteristics

A container according to JIS K 2540 containing 1 g of a sample oil and 1 g of iron powder was left under an atmosphere with a constant temperature of 150 degrees C for seven days, and then the evaporated amount of the sample oil was calculated, from a quantity before the test and a quantity after the test, in mass percentage relative to the amount of the sample oil as originally obtained before the test.

### Evaluation Results

As is evident from the results shown in Tables 1 to 3, the sample oils of Examples 1 to 4, each of which corresponds to the lubricating oil composition according to the invention and contains a base oil blended with the component (A), the component (B) and the component (C), are all excellent in wear resistance and evaporation characteristics and generate less sludge. In contrast, the sample oils of Comparative Examples 1 to 14, each of which does not contain all the above compositional elements, fail to satisfy all the above properties.

## Claims

1. A lubricating oil composition comprising:
a base oil;
(A) a phosphate;
(B) a thiophosphate; and
(C) a naphthylamine derivative.

2. The lubricating oil composition according to claim 1, further comprising (D) an alkenylsuccinic acid polyhydric alcohol ester.

3. The lubricating oil composition according to claim 1 or 2, further comprising (E) a benzotriazole or a derivative thereof.

4. The lubricating oil composition according to any one of claims 1 to 3, wherein the base oil is a hydrocarbon base oil.

5. The lubricating oil composition according to any one of claims 1 to 4, wherein the lubricating oil composition is used for an oil-impregnated bearing.

6. The lubricating oil composition according to claim 5, wherein the oil-impregnated bearing is used for a rotation drive motor for a synthetic resin disc.
